# EUROPEAN PATENT APPLICATION

(11) **EP 4 636 436 A1**
(43) Date of publication of application: **22.10.2025**
(21) Application number: 23903254.3
(22) Date of filing: 27.11.2023
(51) Int. Cl.: G01S 7/4863, G01C 3/06, G01S 17/894

(54) **DISTANCE IMAGE CAPTURING ELEMENT, DISTANCE IMAGE CAPTURING DEVICE, AND DISTANCE IMAGE CAPTURING METHOD**

(30) Priority: 12.12.2022 JP 2022197882
(71) Applicant: Toppan Holdings Inc., Tokyo 110-0016 (JP)
(72) Inventor: OOKUBO Yu, Tokyo 110-0016 (JP)
(74) Representative: Plasseraud IP
(86) International application number: PCT/JP2023/042338
(87) International publication number: WO 2024/127960

(57) **Abstract**

A range imaging element includes a semiconductor substrate, and a pixel circuit formed on the semiconductor substrate. The pixel circuit includes at least a photoelectric conversion element that generates charge based on light incident from a measurement space, charge storages that store the charge, at least one charge transfer transistor on a transfer path through which the charge is transferred from the photoelectric conversion element to one of the charge storages, and at least one charge drainage transistor on a drainage path through which the charge is drained from the photoelectric conversion element. A surface of the photoelectric conversion element has a rectangular shape in plan view, the at least one charge drainage transistor includes 2N (N is an integer, N ≥ 1) charge drainage transistors, and at least one of the 2N charge drainage transistors is a floating transistor that is not electrically connected to the photoelectric conversion element.

## Description

### [Technical Field]

The present invention relates to a range imaging element, a range imaging device, and a range imaging method.

The present application claims priority to Japanese Patent Application No. 2022-197882 filed December 12, 2022, the contents of which are incorporated herein by reference.

### [Background Art]

Conventional time-of-flight (hereinafter referred to as "TOF") range imaging sensors use the known speed of light to measure the distance between the measurement device and an object based on the time of flight of light in a space (measurement space) (see, for example, Patent Literature 1).

In a TOF range imaging sensor, the amount of incident light is converted into charge by a photoelectric conversion element, and the charge obtained by conversion is stored in charge storages. Thus, in order to transfer the charge from the photoelectric conversion element to the charge storages, the charge storages are provided with charge transfer gates (transistors) that transfer the charge. Furthermore, the charge storages are provided with charge drainage gates (transistors) that drain the charge obtained through conversion by the photoelectric conversion element in a period (drain period) during which the charge is not stored and is drained.

### [Citation List]

### [Patent Literature]

[PTL 1] JP 4235729 B

### [Summary of the Invention]

### [Technical Problem]

However, the number of charge transfer gates or charge drainage gates to be driven during switching may vary between the timing of switching from a state in which charge is drained to a state in which charge is stored in a charge storage and the timing of switching from the state in which charge is stored in a charge storage to a state in which charge is stored in another charge storage.

In that case, variation in load applied during driving of the transistors depending on the timing may cause variation in characteristics of control pulses for controlling charge drainage or storage, or the like. Variation in characteristics of the control pulses leads to variation in duration of a storage duration for which charge is stored in the charge storages, causing distance measurement with lower accuracy.

The present invention has been made in view of such circumstances, and provides a range imaging element, a range imaging device, and a range imaging method capable of driving charge transfer gates or charge drainage gates so that charge is stored in charge storages for a given storage duration.

### [Solution to Problem]

In order to solve the problem described above, a range imaging element according to the present disclosure includes: a semiconductor substrate; and a pixel circuit formed on the semiconductor substrate, the pixel circuit including at least a photoelectric conversion element configured to generate charge based on light incident from a space of which measurement is to be performed, charge storages each configured to store at least some of the generated charge, at least one charge transfer transistor provided on a transfer path, the at least one charge transfer transistor being configured to transfer at least some of the generated charge from the photoelectric conversion element to a corresponding one of the charge storages through the transfer path, and at least one charge drainage transistor provided on a drainage path, the at least one charge drainage transistor being configured to drain the generated charge from the photoelectric conversion element through the drainage path. A surface of the photoelectric conversion element has a rectangular shape in plan view, the at least one charge transfer transistor includes 2M charge transfer transistors, and the at least one charge drainage transistor includes 2N charge drainage transistors, M being an integer greater than or equal to 2, N being an integer greater than or equal to 1, and at least one of the 2N charge drainage transistors is a floating transistor that is not electrically connected to the photoelectric conversion element.

The range imaging element according to the present disclosure may be configured such that M charge transfer transistors are arranged on each of long sides of the photoelectric conversion element symmetrically with respect to an x-axis that is parallel to the long sides and passes through a center of the photoelectric conversion element, the M charge transfer transistors on one of the long sides facing the M charge transfer transistors on the other of the long sides, and the charge drainage transistors are provided on respective short sides of the photoelectric conversion element.

The range imaging element according to the present disclosure may be configured such that the charge transfer transistors are arranged symmetrically with respect to a y-axis that is parallel to the short sides and passes through the center of the photoelectric conversion element.

The range imaging element according to the present disclosure may be configured such that the charge storages are arranged symmetrically with respect to the x-axis.

A range imaging device according to the present disclosure includes: a light receiving unit including a range imaging element including a semiconductor substrate, and a pixel circuit formed on the semiconductor substrate, the pixel circuit including at least a photoelectric conversion element configured to generate charge based on light incident from a space of which measurement is to be performed, charge storages each configured to store at least some of the generated charge, at least one charge transfer transistor provided on a transfer path, the at least one charge transfer transistor being configured to transfer at least some of the generated charge from the photoelectric conversion element to a corresponding one of the charge storages through the transfer path, and at least one charge drainage transistor provided on a drainage path, the at least one charge drainage transistor being configured to drain the generated charge from the photoelectric conversion element through the drainage path; and a range image processing unit configured to control driving of the at least one charge transfer transistor and the at least one charge drainage transistor of the range imaging element. A surface of the photoelectric conversion element has a rectangular shape in plan view, the at least one charge transfer transistor includes 2M charge transfer transistors, and the at least one charge drainage transistor includes 2N charge drainage transistors, M being an integer greater than or equal to 2, N being an integer greater than or equal to 1, and the range image processing unit maintains at least one of the 2N charge drainage transistors in an OFF state regardless of whether the charge is drained or stored.

The range imaging device according to the present disclosure may be configured such that to drain the charge, the range image processing unit causes a first charge drainage transistor of the 2N charge drainage transistors to be in an ON state, and causes a second charge drainage transistor of the 2N charge drainage transistors to be in the OFF state, the second charge drainage transistor being different from the first charge drainage transistor, and to perform switching from a state in which the charge is drained to a state in which the charge is stored, the range image processing unit causes the first charge drainage transistor to be in the OFF state and causes one of the charge transfer transistors to be in the ON state, and maintains the second charge drainage transistor in the OFF state.

The range imaging device according to the present disclosure may be configured such that N is 1, the range image processing unit alternately performs first drive control and second drive control for each predetermined drive count, in the first drive control, a first charge drainage transistor of the two charge drainage transistors is controlled to be switched to the OFF state in a case where the charge transfer transistors is switched to an ON state, and a second charge drainage transistor of the two charge drainage transistors is maintained in the OFF state regardless of whether the charge transfer transistors is in the ON state or in the OFF state, the second charge drainage transistor being different from the first charge drainage transistor, and in the second drive control, the second charge drainage transistor is controlled to be switched to the OFF state in a case where the charge transfer transistors is switched to the ON state, and the first charge drainage transistor is maintained in the OFF state regardless of whether the charge transfer transistors is in the ON state or in the OFF state.

A range imaging method according to the present disclosure is a range imaging method performed by a range imaging device including: a light receiving unit including a range imaging element including a semiconductor substrate, and a pixel circuit formed on the semiconductor substrate, the pixel circuit including at least a photoelectric conversion element configured to generate charge based on light incident from a space of which measurement is to be performed, charge storages each configured to store at least some of the generated charge, at least one charge transfer transistor provided on a transfer path, the at least one charge transfer transistor being configured to transfer at least some of the generated charge from the photoelectric conversion element to a corresponding one of the charge storages through the transfer path, and at least one charge drainage transistor provided on a drainage path, the at least one charge drainage transistor being configured to drain the generated charge from the photoelectric conversion element through the drainage path; and a range image processing unit configured to control driving of the at least one charge transfer transistor and the at least one charge drainage transistor of the range imaging element, wherein a surface of the photoelectric conversion element has a rectangular shape in plan view, the at least one charge transfer transistor includes 2M charge transfer transistors, and the at least one charge drainage transistor includes 2N charge drainage transistors, M being an integer greater than or equal to 2, N being an integer greater than or equal to 1, and the range image processing unit maintains at least one of the 2N charge drainage transistors in an OFF state regardless of whether the charge is drained or stored.

### [Advantageous Effects of the Invention]

As described above, the present invention is capable of driving charge transfer gates or charge drainage gates so that charge is stored in charge storages for a given storage duration.

### [Brief Description of the Drawings]

Fig. 1 is a block diagram illustrating a configuration example of a range imaging device 1 according to an embodiment.
Fig. 2 is a block diagram illustrating a configuration example of a range imaging element (range imaging sensor 32) according to the embodiment.
Fig. 3 is a circuit diagram illustrating a configuration example of a pixel circuit 321 according to the embodiment.
Fig. 4 is a diagram illustrating an example of a layout pattern of the pixel circuit 321 according to the embodiment.
Fig. 5 is a diagram illustrating a positional relationship between transistors in Fig. 4.
Fig. 6 is a timing chart illustrating an example of the timing of driving the pixel circuits 321 according to the embodiment.
Fig. 7 is a timing chart illustrating an example of the timing of driving the pixel circuits 321 according to the embodiment.
Fig. 8 is a timing chart illustrating an example of the timing of driving the pixel circuits 321 according to the embodiment.
Fig. 9 is a diagram illustrating an example in which the pixel circuits 321 according to the embodiment are driven.
Fig. 10 is a flowchart illustrating a flow of a process performed by a range image processing unit 4 according to the embodiment.

### [Description of the Embodiments]

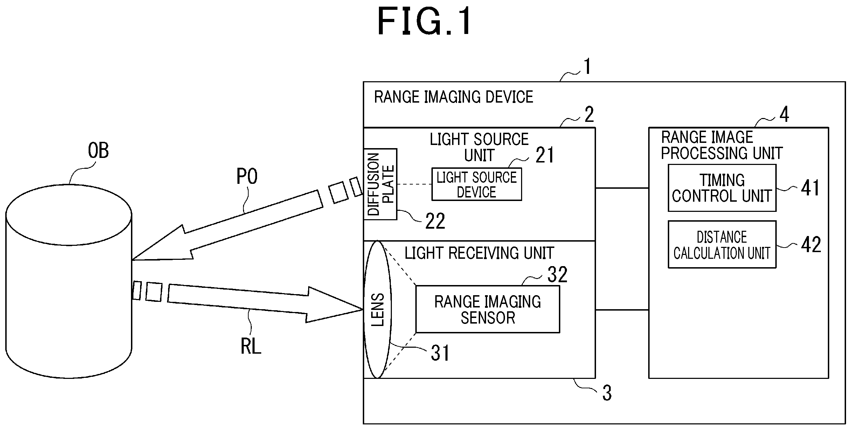

An embodiment of the present invention will be described with reference to the drawings. Fig. 1 is a block diagram illustrating a configuration example of a range imaging device 1. The range imaging device 1 includes, for example, a light source unit 2, a light receiving unit 3, and a range image processing unit 4. Fig. 1 also illustrates a subject OB as an object to which the distance is to be measured by the range imaging device 1. A range imaging element may be, for example, a range imaging sensor 32 (described later) of the light receiving unit 3.

The light source unit 2 emits, according to control by the range image processing unit 4, an optical pulse PO to a space of which an image is to be captured and in which the subject OB is present as an object to which the distance is to be measured by the range imaging device 1. The light source unit 2 may be, for example, a surface-emitting semiconductor laser module such as a vertical-cavity surface-emitting laser (VCSEL). The light source unit 2 includes a light source device 21 and a diffusion plate 22.

The light source device 21 is a light source that emits laser light in the near-infrared wavelength range (e.g., in a wavelength range of 850 nm to 940 nm) as the optical pulse PO with which the subject OB is irradiated. The light source device 21 may be, for example, a semiconductor laser light-emitting element. The light source device 21 emits pulsed laser light according to control by a timing control unit 41. The diffusion plate 22 is an optical component that diffuses laser light in the near-infrared wavelength range emitted from the light source device 21 over an area in which the subject OB is irradiated with the diffused laser light. The pulsed laser light diffused by the diffusion plate 22 emitted as the optical pulse PO, and the subject OB is irradiated with the optical pulse PO.

The light receiving unit 3 receives reflected light RL of the optical pulse PO reflected by the subject OB to which the distance is to be measured by the range imaging device 1, and outputs a pixel signal corresponding to the reflected light RL received. The light receiving unit 3 includes a lens 31 and the range imaging sensor 32. The lens 31 is an optical lens that guides the reflected light RL incident on the lens 31 to the range imaging sensor 32. The reflected light RL incident on the lens 31 emerges toward the range imaging sensor 32, and is received by (incident on) pixel circuits provided in a light receiving region of the range imaging sensor 32.

The range imaging sensor 32 is an imaging element used in the range imaging device 1. The range imaging sensor 32 includes a plurality of pixels in a two-dimensional light receiving region. Pixel circuits (pixel circuits 321) of the range imaging sensor 32 each include a single photoelectric conversion element, a plurality of charge storages corresponding to the single photoelectric conversion element, and components each of which distributes charge to a corresponding one of the charge storages.

The range imaging sensor 32 distributes charge generated by the photoelectric conversion element to each of the charge storages, according to control by the timing control unit 41. Furthermore, the range imaging sensor 32 outputs a pixel signal corresponding to the quantity of charge distributed to each of the charge storages. The range imaging sensor 32 includes the plurality of pixel circuits arranged in a two-dimensional matrix, and outputs each pixel signal for one frame for the individual pixel circuits.

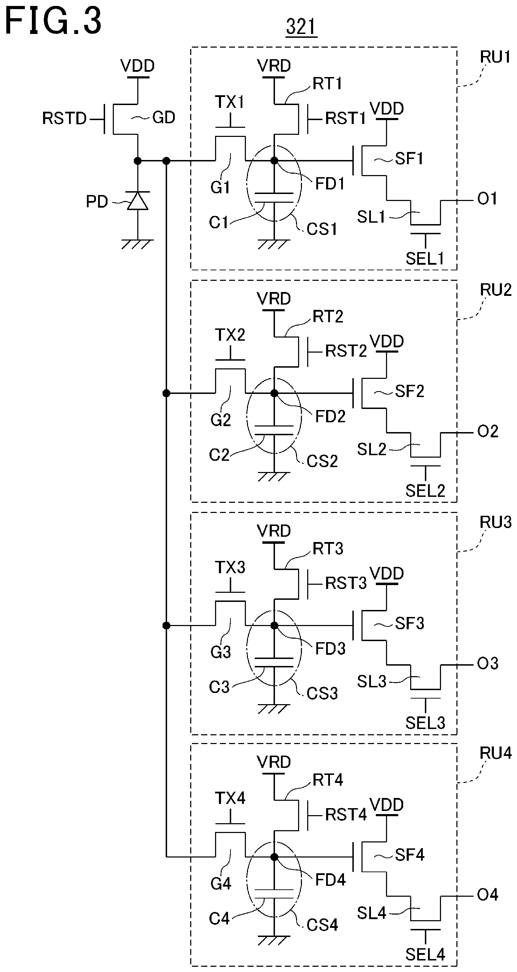

The range image processing unit 4 controls the range imaging device 1 to calculate the distance to the subject OB. The range image processing unit 4 includes the timing control unit 41 and a distance calculation unit 42. The timing control unit 41 controls the timing of outputting various control signals required for distance measurement. The various control signals include, for example, a signal for controlling emission of the optical pulse PO, a signal for distributing the reflected light RL to the plurality of charge storages, a signal for draining charge to prevent light such as ambient light received by the receiving unit 3 from being stored in the charge storages, and a signal for controlling a distribution count per frame. The distribution count is the number of repetitions of the process of distributing charge to charge storages CS (see Fig. 3).

The distance calculation unit 42 outputs distance information obtained by calculating the distance to the subject OB, based on a pixel signal output from the range imaging sensor 32. The distance calculation unit 42 calculates a delay time Td from the time at which the optical pulse PO is emitted to the time at which the reflected light RL is received, based on the quantity of charge stored in the plurality of charge storages CS. The distance calculation unit 42 calculates the distance from the range imaging device 1 to the subject OB according to the calculated delay time Td.

With such a configuration, in the range imaging device 1, the light source unit 2 irradiates the subject OB with the optical pulse PO in the near-infrared wavelength range, the light receiving unit 3 receives the reflected light RL of the optical pulse PO reflected by the subject OB, and the range image processing unit 4 outputs distance information obtained by measuring the distance between the subject OB and the range imaging device 1. In Fig. 1, the range image processing unit 4 is included in the range imaging device 1; however, the range image processing unit 4 may be a component provided externally to the range imaging device 1.

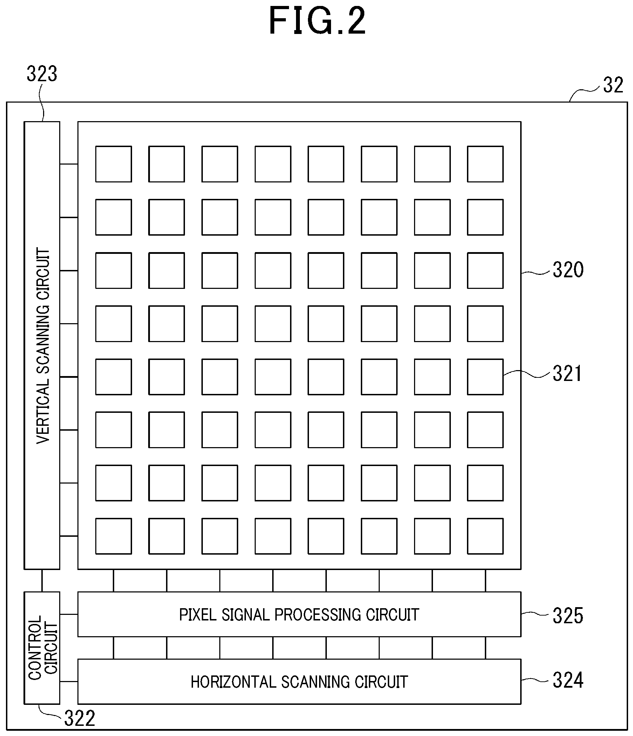

Next, a configuration of the range imaging sensor 32 used as a range imaging element in the range imaging device 1 will be described. Fig. 2 is a block diagram illustrating a configuration example of the range imaging element (range imaging sensor 32). As shown in Fig. 2, the range imaging sensor 32 includes, for example, a light receiving region 320 in which the plurality of pixel circuits 321 are arranged, a control circuit 322, a vertical scanning circuit 323 that performs distribution operation, a horizontal scanning circuit 324, and a pixel signal processing circuit 325.

The light receiving region 320 is a region in which the plurality of pixel circuits 321 are arranged. Fig. 2 shows an example in which the pixel circuits 321 are arranged in a two-dimensional matrix with 8 rows and 8 columns. The pixel circuits 321 store charge corresponding to the amount of light received. The control circuit 322 controls the operation of the components of the range imaging sensor 32, for example, according to instructions from the timing control unit 41 of the range image processing unit 4.

The vertical scanning circuit 323 is a circuit that controls, for each row, the pixel circuits 321 arranged in the light receiving region 320, according to control by the control circuit 322. The vertical scanning circuit 323 causes the pixel circuits 321 to output, to the pixel signal processing circuit 325, each voltage signal corresponding to the quantity of charge stored in the individual charge storages CS of the pixel circuits 321.

The pixel signal processing circuit 325 performs predetermined signal processing (e.g., noise suppression processing, A/D conversion processing, etc.) to voltage signals output from the pixel circuits 321 in each row, according to control by the control circuit 322. The horizontal scanning circuit 324 is a circuit that causes a signal output from the pixel signal processing circuit 325 to be sequentially output in a time series manner, according to control by the control circuit 322. Thus, a pixel signal corresponding to the quantity of charge stored for one frame is sequentially output to the range image processing unit 4. The following description assumes that the pixel signal processing circuit 325 performs A/D conversion processing and the pixel signal is a digital signal.

A configuration of the pixel circuits 321 arranged in the light receiving region 320 of the range imaging sensor 32 will be described. Fig. 3 is a circuit diagram illustrating a configuration example of each of the pixel circuits 321. The pixel circuit 321 in Fig. 3 is a configuration example including four pixel signal reading units.

The pixel circuit 321 includes a single photoelectric conversion element PD, charge drainage transistors GD (GD1 and GD2 described later), and four pixel signal reading units RU (RU1 to RU4) each of which outputs a voltage signal from a corresponding output terminal O. The pixel signal reading units RU each include a charge transfer transistor G, a floating diffusion FD, a charge storage capacitor C, a reset transistor RT, a source follower transistor SF, and a selection transistor SL. The floating diffusion FD and the charge storage capacitor C constitute a charge storage CS.

In the pixel circuit 321 shown in Fig. 3, the pixel signal reading unit RU1 that outputs a voltage signal from an output terminal O1 includes a charge transfer transistor G1 (transfer MOS transistor), a floating diffusion FD1, a charge storage capacitor C1, a reset transistor RT1, a source follower transistor SF1, and a selection transistor SL1. In the pixel signal reading unit RU1, the floating diffusion FD1 and the charge storage capacitor C1 constitute a charge storage CS1. The pixel signal reading units RU2, RU3, and RU4 also have the same configuration.

The photoelectric conversion element PD is an embedded photodiode that performs photoelectric conversion of incident light to generate charge based on the incident light and stores the generated charge. In the present embodiment, incident light is incident from a space of which measurement is to be performed. In the pixel circuit 321, charge generated through photoelectric conversion of the incident light by the photoelectric conversion element PD is distributed to each of the four charge storages CS (CS1 to CS4), and each voltage signal corresponding to the quantity of charge distributed is output to the pixel signal processing circuit 325.

The configuration of the pixel circuits 321 is not limited to the configuration including the four pixel signal reading units RU (RU1 to RU4) as shown in Fig. 3. The pixel circuits 321 each may include, for example, 2M (M is an integer, M ≥ 2) or more pixel signal reading units RU. That is, the pixel circuits 321 each may include 2M (M is an integer, M ≥ 2) or more charge transfer transistors G.

Furthermore, the configuration of the pixel circuits 321 is not limited to the configuration including the charge drainage transistors GD (GD1 and GD2 described later) as shown in Fig. 3. The pixel circuits 321 each may include, for example, 2N (N is an integer, N ≥ 1) or more charge drainage transistors GD.

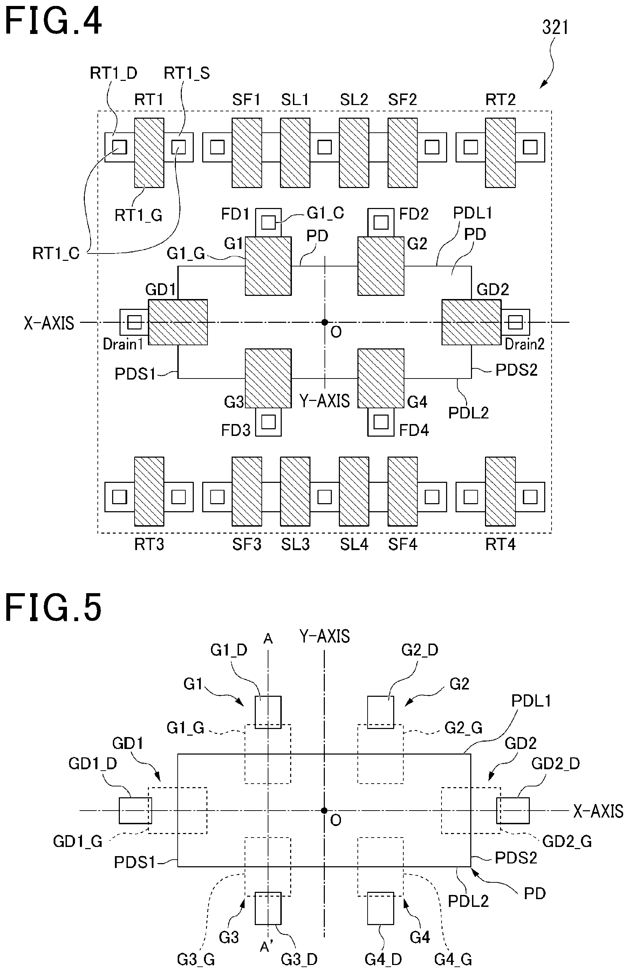

A layout pattern of the pixel circuits 321 will be described with reference to Fig. 4. Fig. 4 is a diagram illustrating an example arrangement (layout pattern) of the transistors of each of the pixel circuits 321 according to the present embodiment.

The transistors are integrated circuits constituting each of the pixel circuits 321, and specifically, the charge transfer transistors G1, G2, G3, and G4, the source follower transistors SF1, SF2, SF3, and SF4, the selection transistors SL1, SL2, SL3, and SL4, the reset transistors RT1, RT2, RT3, and RT4, the charge drainage transistors GD1 and GD2, and the photoelectric conversion element PD. All the transistors described above are n-channel MOS transistors formed on a p-type semiconductor substrate.

As shown in the example in Fig. 4, for example, the reset transistor RT1 is composed of a drain RT1_D (n-type diffusion layer (diffusion layer of n-type impurities)), a source RT1_S (n-type diffusion layer), and a gate RT1_G on the p-type semiconductor substrate.

A contact RT1_C is a pattern indicating a contact that is provided in each of the diffusion layers, that is, the drain RT1_D (n-type diffusion layer) and the source RT1_S (n-type diffusion layer) of the reset transistor RT1, and that is connected to a wire (not shown). The charge transfer transistors G1 to G4, the source follower transistors SF1 to SF4, the selection transistors SL1 to SL4, the reset transistors RT2 to RT4, and the charge drainage transistors GD1 and GD2 also have the same configuration.

The photoelectric conversion element PD has a rectangular shape, and has a long side PDL1, a long side PDL2 facing the long side PDL1 in parallel, a short side PDS1, and a short side PDS2 facing the short side PDS1 in parallel.

In the rectangular pattern of the photoelectric conversion element PD, an x-axis is an axis that is perpendicular to the short side PDS1 (and the short side PDS2) of the rectangle (i.e., parallel to the long sides PDL1 and PDL2 of the rectangle) and that passes through a center O of the rectangle. A y-axis is an axis that is perpendicular to the x-axis, that is, perpendicular to the long side PDL1 (and the long side PDL2) of the rectangle (i.e., parallel to the short sides PDS1 and PDS2 of the rectangle), and that passes through the center O of the rectangle.

The charge drainage transistor GD1 is provided on a portion of the short side PDS1 on the x-axis.

The charge drainage transistor GD2 is provided on a portion of the short side PDS2 on the x-axis, and the charge drainage transistors GD1 and GD2 are arranged symmetrically with respect to the y-axis. That is, the charge drainage transistor GD2 is provided on a portion of the short side PDS2 on the x-axis, and the charge drainage transistors GD1 and GD2 are arranged symmetrically with respect to the y-axis.

As described above, the charge drainage transistors GD1 and GD2 are provided on the x-axis and located at the same distance from the y-axis. Thus, the charge drainage transistors GD1 and GD2 are located at the same distance from the center O of the photoelectric conversion element PD.

The charge transfer transistors G1 and G2 are arranged on the long side PDL1 symmetrically with respect to the y-axis.

The charge transfer transistors G3 and G4 are arranged on the long side PDL2 symmetrically with respect to the y-axis.

The charge transfer transistors G1 and G3 are arranged symmetrically with respect to the x-axis.

The charge transfer transistors G2 and G4 are arranged symmetrically with respect to the x-axis.

As described above, the charge transfer transistors G1, G2, G3, and G4 are located at the same distance from each of the x-axis, the y-axis, and the center O.

The charge transfer transistors G1 to G4 have the same size (the same channel length and width), and have the same transistor characteristics.

Thus, the same transfer efficiency (transfer characteristics) can be achieved for charge generated by the photoelectric conversion element PD, allowing the charge to be stored in the charge storages CS1 to CS4 with the same transfer characteristics. Therefore, the distance between a subject and the range imaging device can be obtained with high accuracy.

The reset transistors RT1 and RT2 and the respective reset transistors RT3 and RT4 are arranged symmetrically with respect to the x-axis.

The source follower transistors SF1 and SF2 and the respective source follower transistors SF3 and SF4 are arranged symmetrically with respect to the x-axis.

The selection transistors SL1 and SL2 and the respective selection transistors SL3 and SL4 are arranged symmetrically with respect to the x-axis.

Fig. 4 shows an arrangement of the transistors of each of the pixel circuits 321 on the semiconductor substrate. In Fig. 4, a wiring pattern and the charge storage capacitors (C1 to C4) are omitted. For example, the charge storages CS1, CS2, CS3, and CS4 are located at the positions of the floating diffusions FD1, FD2, FD3, and FD4, respectively.

A positional relationship between transistors that are mainly driven to perform control to store or drain charge, specifically, the photoelectric conversion element PD, the charge transfer transistors G, and the charge drainage transistors GD, will be described with reference to Fig. 5.

Fig. 5 is a diagram illustrating an example of the positional relationship between the photoelectric conversion element PD, the charge transfer transistors G, and the charge drainage transistors GD in Fig. 4.

As shown in the example in Fig. 5, the charge drainage transistor GD1 is composed of a drain GD1_D, a gate GD1_G, and a source (n-type diffusion layer of the photoelectric conversion element PD). The drain GD1_D is connected to a power supply VDD via a contact and a wire.

In response to application of a gate voltage at an "H" level to the gate GD1_G, the charge drainage transistor GD1 transfers charge (electrons) generated by the photoelectric conversion element PD to the drain GD1_D. The drain GD1_D drains, to the power supply VDD, the charge transferred from the photoelectric conversion element PD.

The charge drainage transistor GD2 has the same configuration as the charge drainage transistor GD1, and is composed of a drain GD2_D, a gate GD2_G, and a source (n-type diffusion layer of the photoelectric conversion element PD). The drain GD2_D is connected to a power supply VDD via a contact and a wire.

In response to application of a gate voltage at the "H" level to the gate GD2_G, the charge drainage transistor GD2 transfers charge (electrons) generated by the photoelectric conversion element PD to the drain GD2_D. The drain GD2_D drains, to the power supply VDD, the charge transferred from the photoelectric conversion element PD.

The charge transfer transistor G1 is composed of the floating diffusion FD1 as a drain G1_D, a gate G1_G, and a source (n-type diffusion layer of the photoelectric conversion element PD). The floating diffusion FD1 is provided with the charge storage CS1. The drain G1_D is connected to each of a gate SF1_G of the source follower transistor SF1 and the source RT1_S of the reset transistor RT1 via a contact and a wire.

In response to application of a gate voltage at the "H" level to the gate G1_G, the charge transfer transistor G1 transfers charge (electrons) generated by the photoelectric conversion element PD to the floating diffusion FD1 as a drain G1_D. The floating diffusion FD1 stores the charge transferred from the photoelectric conversion element PD.

The charge transfer transistors G2, G3, and G4 have the same configuration as the charge transfer transistor G1.

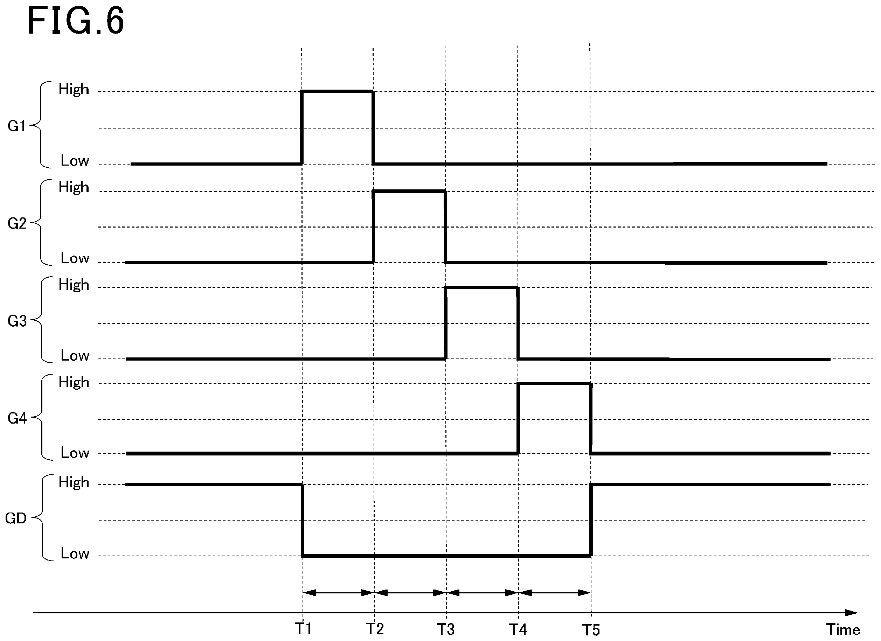

Control performed by the range image processing unit 4 to drive the pixel circuits 321, that is, control performed to store or drain charge, will be described with reference to Figs. 6 to 8. Figs. 6 to 8 are each a timing chart illustrating an example of the timing of driving the pixel circuits 321.

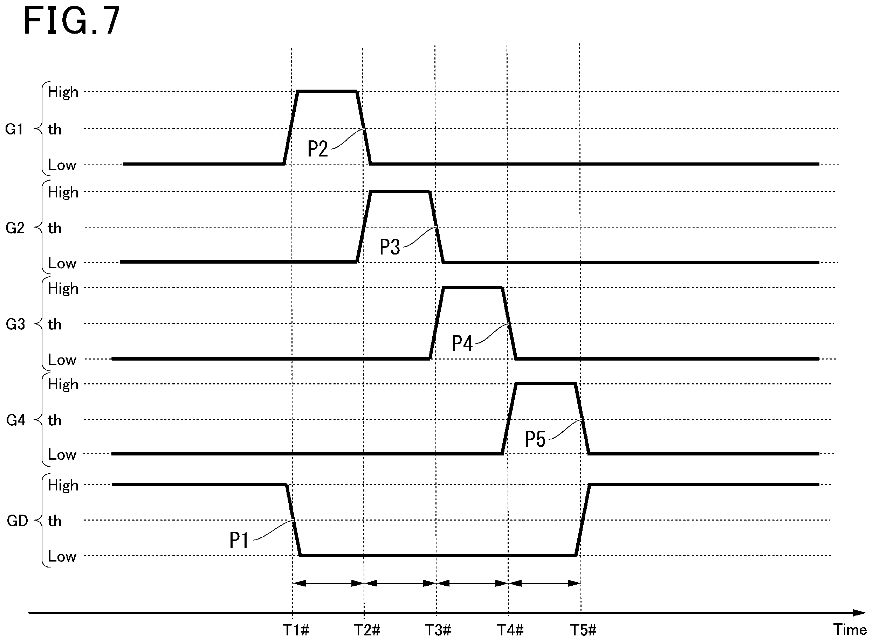

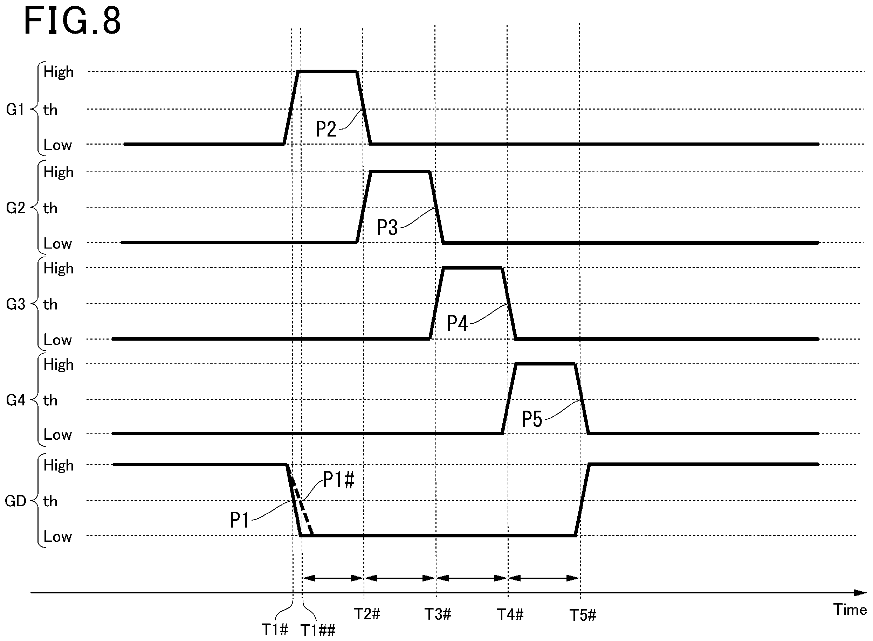

Fig. 6 is a schematic ideal timing chart. Figs. 7 and 8 are each a schematic actual timing chart in which pulse waveform distortion occurs due to the influence of parasitic capacitance or the like.

In Figs. 6 to 8, a control pulse denoted by "G1" indicates the timing of opening and closing of the charge transfer transistor G1 that causes charge to be stored in the charge storage CS1.

A control pulse denoted by "G2" indicates the timing of opening and closing of the charge transfer transistor G2 that causes charge to be stored in the charge storage CS2.

A control pulse denoted by "G3" indicates the timing of opening and closing of the charge transfer transistor G3 that causes charge to be stored in the charge storage CS3.

A control pulse denoted by "G4" indicates the timing of opening and closing of the charge transfer transistor G4 that causes charge to be stored in the charge storage CS4.

A control pulse denoted by "GD" indicates the timing of opening and closing of the charge drainage transistors GD that cause charge to be drained.

The range image processing unit 4 controls the light source unit 2 so that the optical pulse PO is emitted for an emission time To. The emitted optical pulse PO is reflected by the subject OB, and for example, after the delay time Td, the reflected light RL is received by the distance image sensor 32. The reflected light RL received by the range imaging sensor 32 is converted into charge by the photoelectric conversion element PD.

Then, at a storage timing corresponding to an emission timing at which the optical pulse PO is emitted, the range image processing unit 4 performs control so that the charge is stored in the charge storages CS1, CS2, CS3, and CS4 in this order. After the range image processing unit 4 drives the pixel circuits 321 so that the charge is stored in the charge storages CS, the range image processing unit 4 performs control to drain the charge. The range image processing unit 4 repeatedly performs this operation according to the emission timing.

First, the control performed by the range image processing unit 4 to drive the pixel circuits 321 will be described with reference to Fig. 6. Fig. 6 shows the timing of control pulses used by the range image processing unit 4 to control the opening and closing of the charge transfer transistors G1 to G4 and the charge drainage transistors GD.

First, the pixel circuits 321 are assumed to be controlled to be a state in which charge is drained. In this case, the range image processing unit 4 controls the charge transfer transistors G1 to G4 to be in an OFF state, and controls the charge drainage transistors GD to be in an ON state. Thus, charge is drained.

In this case, in Fig. 6, the control pulses corresponding to "G1", "G2", "G3", and "G4" are "Low", and the control pulse corresponding to "GD" is "High".

Next, at a storage timing synchronized with the emission timing of the optical pulse PO, the range image processing unit 4 performs control so that charge is stored in the charge storage CS1. In this case, for example, at a time T1, the range image processing unit 4 switches the charge drainage transistors GD to the OFF state. Furthermore, the range image processing unit 4 switches the charge transfer transistor G1 to the ON state. Thus, charge is stored in the charge storage CS1.

In this case, in Fig. 6, at the time T1, the control pulse corresponding to "GD" is switched to "Low", and the control pulse corresponding to "G1" is switched to "High".

Next, the range image processing unit 4 performs control so that charge is stored in the charge storage CS2. In this case, for example, at a time T2, the range image processing unit 4 switches the charge transfer transistor G1 to the OFF state. Furthermore, the range image processing unit 4 switches the charge transfer transistor G2 to the ON state. Thus, charge is stored in the charge storage CS2.

In this case, in Fig. 6, at the time T2, the control pulse corresponding to "G1" is switched to "Low", and the control pulse corresponding to "G2" is switched to "High".

Next, the range image processing unit 4 performs control so that charge is stored in the charge storage CS3. In this case, for example, at a time T3, the range image processing unit 4 switches the charge transfer transistor G2 to the OFF state. Furthermore, the range image processing unit 4 switches the charge transfer transistor G3 to the ON state. Thus, charge is stored in the charge storage CS3.

In this case, in Fig. 6, at the time T3, the control pulse corresponding to "G2" is switched to "Low", and the control pulse corresponding to "G3" is switched to "High".

Next, the range image processing unit 4 performs control so that charge is stored in the charge storage CS4. In this case, for example, at a time T4, the range image processing unit 4 switches the charge transfer transistor G3 to the OFF state. Furthermore, the range image processing unit 4 switches the charge transfer transistor G4 to the ON state. Thus, charge is stored in the charge storage CS4.

In this case, in Fig. 6, at the time T4, the control pulse corresponding to "G3" is switched to "Low", and the control pulse corresponding to "G4" is switched to "High".

Next, the range image processing unit 4 performs control so that charge is drained. In this case, for example, at a time T5, the range image processing unit 4 switches the charge transfer transistor G4 to the OFF state. Furthermore, the range image processing unit 4 switches the charge drainage transistors GD to the ON state. Thus, charge is drained.

In this case, in Fig. 6, at the time T5, the control pulse corresponding to "G4" is switched to "Low", and the control pulse corresponding to "GD" is switched to "High".

In the example in Fig. 6, a storage duration for which charge is stored in the charge storage CS1 is the time from the time T1 at which the control pulse corresponding to "GD" is switched to "Low" and the control pulse corresponding to "G1" is switched to "High" to the time T2 at which the control pulse corresponding to "G1" is switched to "Low".

Similarly, a storage duration for which charge is stored in the charge storage CS2 is the time from the time T2 to the time T3. A storage duration for which charge is stored in the charge storage CS3 is the time from the time T3 to the time T4. A storage duration for which charge is stored in the charge storage CS4 is the time from the time T4 to the time T5.

The waveform shape of an actual control pulse is influenced by a parasitic capacitance or the like, and thus is not an ideal rectangular. As shown in Fig. 7, waveform distortion occurs in the rise and fall of a control pulse. In this case, the waveform distortion may change the storage duration.

For example, a control pulse exceeding a threshold th is assumed to be "High", and a control pulse less than the threshold th is assumed to be "Low".

In the example in Fig. 7, the control pulse corresponding to "GD" is switched to "Low" at a time T1# corresponding to a point P1 at which the control pulse corresponding to "GD" becomes less than the threshold th.

The control pulse corresponding to "G1" is switched to "Low" at a time T2# corresponding to a point P2 at which the control pulse corresponding to "G1" becomes less than the threshold th.

The control pulse corresponding to "G2" is switched to "Low" at a time T3# corresponding to a point P3 at which the control pulse corresponding to "G2" becomes less than the threshold th.

The control pulse corresponding to "G3" is switched to "Low" at a time T4# corresponding to a point P4 at which the control pulse corresponding to "G3" becomes less than the threshold th.

The control pulse corresponding to "G4" is switched to "Low" at a time T5# corresponding to a point P5 at which the control pulse corresponding to "G4" becomes less than the threshold th.

In this case, the storage duration for which charge is stored in the charge storage CS1 is the time from the time T1# at which the control pulse corresponding to "GD" is switched to "Low" and the control pulse corresponding to "G1" is switched to "High" to the time T2# at which the control pulse corresponding to "G1" is switched to "Low".

Similarly, in the example in Fig. 7, the storage duration for which charge is stored in the charge storage CS2 is the time from the time T2# to the time T3#. The storage duration for which charge is stored in the charge storage CS3 is the time from the time T3# to the time T4#. The storage duration for which charge is stored in the charge storage CS4 is the time from the time T4# to the time T5#.

In a case where waveform distortions having similar characteristics, in particular, similar fall characteristics, occur in control pulses, although a delay occurs, the storage duration is assumed to have approximately the same duration as the storage duration in a case where no waveform distortion occurs.

Waveform distortions having similar characteristics may occur in control pulses, for example, when the transistors as the charge transfer transistors G and the charge drainage transistors GD are n-channel MOS transistors formed on a p-type semiconductor substrate that have the same size (the same channel length and width) and the same transistor characteristics, as described with reference to Figs. 4 and 5.

As shown in Figs. 4 and 5, a single pixel circuit 321 includes two charge drainage transistors GD, i.e., the charge drainage transistors GD1 and GD2. On the other hand, a single pixel circuit 321 includes a single set of charge transfer transistors G1 to G4 corresponding to "G1", "G2", "G3", and "G4", respectively.

The range image processing unit 4 may control two transistors, i.e., the charge drainage transistors GD1 and GD2, using the control pulse corresponding to "GD", and control one of the charge transfer transistors G1 to G4 using the control pulse corresponding to "G1", "G2", "G3 ", or "G4".

In that case, a larger load is assumed to be applied to the control pulse corresponding to "GD" than the control pulse corresponding to "G1", "G2", "G3", or "G4". Thus, when the two transistors are controlled using the control pulse corresponding to "GD", the control pulse is assumed to have less steep fall characteristics than the control pulse corresponding to "G1", "G2", "G3", or "G4".

Fig. 8 schematically shows an example of a timing chart for a case in which a larger load is applied to the control pulse corresponding to "GD" than the control pulse corresponding to "G1", "G2", "G3", or "G4".

As shown in Fig. 8, when a larger load is applied to the control pulse corresponding to "GD", the control pulse has less steep fall characteristics than the control pulse corresponding to "G1", "G2", "G3", or "G4".

The storage duration for which charge is stored in the charge storage CS1 is the time from a time T1## to the time T2#. Specifically, the time T1## corresponding to a point P1# at which the control pulse corresponding to "GD" becomes less than the threshold th is behind the time T1 #.

In this case, the storage duration for which charge is stored in the charge storage CS1 is shorter than the storage duration for which charge is stored in the other charge storages. Thus, the charge storages CS having different storage duration leads to distance calculation by the range image processing unit 4 with lower accuracy.

In order to address this issue, in the present embodiment, a smaller number of charge drainage transistors GD are driven using the control pulse corresponding to "GD", allowing a lower load to be applied to the control pulse.

Specifically, by using the control pulse corresponding to "GD", the range image processing unit 4 controls only one (e.g., the charge drainage transistor GD1) of the two transistors, i.e., the charge drainage transistors GD1 and GD2, to be in the ON state or the OFF state depending on whether charge is stored or drained, and maintains the other (e.g., the charge drainage transistor GD2) of the two transistors in the OFF state regardless of whether charge is stored or drained.

For example, to drain charge, the range image processing unit 4 causes the charge drainage transistor GD1 to be in the ON state, and causes the charge drainage transistor GD2 to be in the OFF state. To perform switching from the state in which charge is drained to the state in which charge is stored, the range image processing unit 4 causes the charge drainage transistor GD1 to be in the OFF state and causes the charge transfer transistor G1 to be in the ON state, and maintains the charge drainage transistor GD2 in the OFF state.

Alternatively, in the range imaging device 1, the two transistors may be arranged so that one (e.g., the charge drainage transistor GD1) of the two transistors can be controlled to be in the ON state or the OFF state and the other (e.g., the charge drainage transistor GD2) serves as a floating transistor and does not perform the function of draining charge.

In the present embodiment, the two charge drainage transistors GD are arranged symmetrically in each of the pixel circuits 321.

Specifically, two charge transfer transistors G are arranged on each of long sides PDL of the photoelectric conversion element PD symmetrically with respect to the x-axis that is parallel to the long sides PDL and passes through the center O of the photoelectric conversion element PD, and the two charge transfer transistors G on one of the long sides PDL face the two charge transfer transistors G on the other long side PDL. Furthermore, a single charge drainage transistor GD is provided on each of short sides PDS of the photoelectric conversion element PD. Furthermore, the charge transfer transistors G are arranged symmetrically with respect to the y-axis that is parallel to the short sides PDS and passes through the center O of the photoelectric conversion element PD. Furthermore, the charge storages CS are arranged symmetrically with respect to the x-axis.

Thus, the structure can have higher symmetry as compared with the case where the other charge drainage transistor GD is removed from each of the pixel circuits 321. This makes it possible to prevent variation in storage duration for the charge transfer transistors during charge transfer.

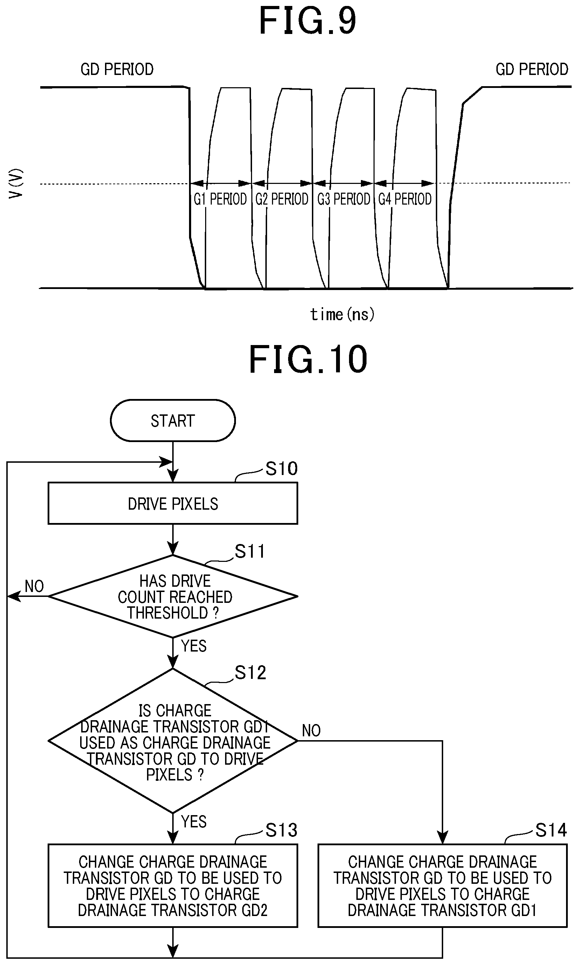

Fig. 9 is a diagram illustrating an example in which the pixel circuits 321 are driven. In Fig. 9, the control pulses corresponding to "G1", "G2", "G3", "G4", and "GD" are shown in an overlapping manner. In Fig. 9, the horizontal axis represents time, and the vertical axis represents voltage.

Fig. 9 shows an example in which the number of transistors driven using each of control pulses is set to one to allow the control pulses to have equivalent fall characteristics.

As shown in Fig. 9, at the timing at which a GD period during which charge is drained is switched to a G1 period during which charge is stored in the charge storage CS1, a control pulse for causing one of the charge drainage transistors GD to be in the OFF state falls.

At the timing at which the G1 period is switched to a G2 period during which charge is stored in the charge storage CS2, a control pulse for causing the charge transfer transistor G1 to be in the OFF state falls.

At the timing at which the G2 period is switched to a G3 period during which charge is stored in the charge storage CS3, a control pulse for causing the charge transfer transistor G2 to be in the OFF state falls.

At the timing at which the G3 period is switched to a G4 period during which charge is stored in the charge storage CS4, a control pulse for causing the charge transfer transistor G3 to be in the OFF state falls.

These control pulses have equivalent fall characteristics; thus, the G1 period, the G2 period, the G3 period, and the G4 period corresponding to the respective storage duration has the same duration.

In the example described above, the range image processing unit 4 performs control so that only one of the two charge drainage transistors GD is used to drain charge; however, the present invention is not limited to this. The range image processing unit 4 may perform control so that the two charge drainage transistors GD are alternately driven to drain charge.

An example of a process in which the two charge drainage transistors GD are alternately driven to drain charge will be described with reference to Fig. 10. Fig. 10 is a flowchart illustrating a flow of a range imaging method performed by the range image processing unit 4 according to the embodiment.

The range image processing unit 4 drives the pixel circuits 321 to cause charge to be stored in the charge storages CS (step S10). The range image processing unit 4 determines whether a drive count of the number of times the pixel circuits 321 are driven has reached a threshold (step S11). In response to the determination that the drive count has reached the threshold, the range image processing unit 4 determines which one of the charge drainage transistors GD, the charge drainage transistor GD1 or the charge drainage transistor GD2, has been used to drive the pixel circuits 321 (step S12). In response to the determination that the charge drainage transistor GD1 is the one of the charge drainage transistors GD used to drive the pixel circuits 321, the range image processing unit 4 changes one of the charge drainage transistors GD to be used next and subsequent times to drive the pixel circuits 321 to the charge drainage transistor GD2 (step S13). On the other hand, in response to the determination that the charge drainage transistor GD2 is the one of the charge drainage transistors GD used to drive the pixel circuits 321, the range image processing unit 4 changes one of the charge drainage transistors GD to be used next and subsequent times to drive the pixel circuits 321 to the charge drainage transistor GD1 (step S14).

The drive count may be set arbitrarily. One of the charge drainage transistors GD to be used may be changed so that the charge drainage transistor GD1 and the charge drainage transistor GD2 are alternately used for each drive, may be changed at a time at which the drive count has reached half the drive count for a frame, may be changed for each drive count corresponding to one frame, or may be changed for a plurality of frames.

As described above, the range imaging sensor 32 (an example of "range imaging element") according to the embodiment is a range imaging element in which the pixel circuits 321 are formed on a semiconductor substrate. Each of the pixel circuits 321 includes at least the photoelectric conversion element PD, the charge storages CS, the charge transfer transistors G, and the charge drainage transistors GD. The photoelectric conversion element PD generates charge based on light incident from a space of which measurement is to be performed. The charge storages CS store charge. The charge transfer transistors G are provided on a transfer path through which charge is transferred from the photoelectric conversion element PD to the charge storages CS. The charge drainage transistors GD are provided on a drainage path through which charge is drained from the photoelectric conversion element PD. A surface of the photoelectric conversion element PD has a rectangular shape in plan view. Each of the pixel circuits 321 includes 2M (M is an integer, M ≥ 2) charge transfer transistors G. Each of the pixel circuits 321 includes 2N (N is an integer, N ≥ 1) charge drainage transistors GD. At least one of the 2N charge drainage transistors GD is a floating transistor that is not electrically connected to the photoelectric conversion element PD.

Thus, the range imaging sensor 32 according to the embodiment drives a smaller number of charge drainage transistors GD of the 2N charge drainage transistors GD provided in the pixel circuits 321 to drain or store charge. Therefore, the control pulses used to drive the charge drainage transistors GD and the control pulses used to drive the charge transfer transistors G can have equivalent fall characteristics. This makes it possible to drive the charge transfer gates or the charge drainage gates so that charge is stored in the charge storages for a given storage duration.

In the range imaging sensor 32 according to the embodiment, two charge transfer transistors G are arranged on each of the long sides PDL of the photoelectric conversion element PD symmetrically with respect to the x-axis, and the two charge transfer transistors G on one of the long sides PDL face the two charge transfer transistors G on the other long side PDL. A single charge drainage transistor GD is provided on each of the short sides PDS of the photoelectric conversion element PD. Furthermore, in the range imaging sensor 32 according to the embodiment, the charge transfer transistors G are arranged symmetrically with respect to the y-axis. Furthermore, in the range imaging sensor 32 according to the embodiment, the charge storages CS are arranged symmetrically with respect to the x-axis. Thus, the range imaging sensor 32 according to the embodiment allows the structure to have higher symmetry. This makes it possible to prevent variation in storage duration for the charge transfer transistors G during charge transfer, as compared with the case where one of the charge drainage transistors GD that does not cause charge to be drained is removed from the pixel circuits 321.

The range imaging device 1 according to the embodiment includes the light receiving unit 3 and the range image processing unit 4. The light receiving unit 3 includes the range imaging sensor 32 in which the pixel circuits 321 are formed on the semiconductor substrate. The range image processing unit 4 controls driving of the charge transfer transistors G and the charge drainage transistors GD of the range imaging sensor 32. A surface of the photoelectric conversion element PD has a rectangular shape in plan view. Each of the pixel circuits 321 includes 2M (M is an integer, M ≥ 2) charge transfer transistors G. Each of the pixel circuits 321 includes 2N (N is an integer, N ≥ 1) charge drainage transistors GD. The range image processing unit 4 maintains at least one of the 2N charge drainage transistors GD in the OFF state regardless of whether charge is drained or stored. As with the effect described above, this makes it possible to drive the charge transfer gates or the charge drainage gates so that charge is stored in the charge storages CS for a given storage duration.

In the range imaging device 1 according to the embodiment, to drain charge, the range image processing unit 4 causes the charge drainage transistor GD1 (an example of "first charge drainage transistor") of the 2N charge drainage transistors GD to be in the ON state, and causes the charge drainage transistor GD2 (an example of "second charge drainage transistor") of the 2N charge drainage transistors GD to be in the OFF state. The second charge drainage transistor is one of the 2N charge drainage transistors that is different from the charge drainage transistor GD1 (an example of "first charge drainage transistor"). To perform switching from the state in which charge is drained to the state in which charge is stored, the range image processing unit 4 causes the charge drainage transistor GD1 (an example of "first charge drainage transistor") to be in the OFF state and causes one of the charge transfer transistors G to be in the ON state, and maintains the charge drainage transistor GD2 (an example of "second charge drainage transistor") in the OFF state. Thus, in the range imaging device 1 according to the embodiment, the control pulses used to perform switching from the state in which charge is drained to the state in which charge is stored and the control pulses used to perform switching of the charge storages CS in which charge is stored can have equivalent fall characteristics. This makes it possible to drive the charge transfer gates or the charge drainage gates so that charge is stored in the charge storages for a given storage duration.

In the range imaging device 1 according to the embodiment, each of the pixel circuits 321 includes two charge drainage transistors GD. The range image processing unit 4 alternately performs first drive control and second drive control for each predetermined drive count. In the first drive control, the charge drainage transistor GD1 (an example of "first charge drainage transistor") is controlled to be switched to the OFF state in a case where one of the charge transfer transistors G is switched to the ON state, and the charge drainage transistor GD2 (an example of "second charge drainage transistor") is maintained in the OFF state regardless of whether the one of the charge transfer transistors G is in the ON state or in the OFF state. In the second drive control, the charge drainage transistor GD2 (an example of "second charge drainage transistor") is controlled to be switched to the OFF state in a case where one of the charge transfer transistors G is switched to the ON state, and the charge drainage transistor GD1 (an example of "first charge drainage transistor") is maintained in the OFF state regardless of whether the one of the charge transfer transistors G is in the ON state or in the OFF state. Thus, in the range imaging device 1 according to the embodiment, the two charge drainage transistors GD can be alternately used to drain charge, allowing the drainage path of the photoelectric conversion element PD to have higher symmetry during charge drainage.

Specifically, by using the control pulse corresponding to "GD", the range image processing unit 4 controls only one (e.g., the charge drainage transistor GD1) of the two transistors, i.e., the charge drainage transistors GD1 and GD2, to be in the ON state or the OFF state, and maintains the other (e.g., the charge drainage transistor GD2) in the OFF state.

All or part of the range imaging device 1 and the range image processing unit 4 according to the embodiment described above may be implemented by a computer. In that case, programs that implement the functions may be recorded on a computer-readable recording medium so that a computer system can read and run the programs recorded on the recording medium. The "computer system" herein includes an operating system (OS) and hardware such as peripheral devices. The "computer-readable recording medium" refers to a storage device such as a portable medium, e.g., a flexible disk, magneto-optical disk, ROM, CD-ROM or the like, or a hard disk incorporated in a computer system. The "computer-readable recording medium" may include a medium that dynamically retains a program for a short period of time, such as a communication line for transmitting the program through a network such as the Internet or a telecommunication line such as a telephone line and retains the program for a given period of time in that case, such as a volatile memory of a computer system that serves as a server or a client. The above programs may implement part of the functions described above, or may implement the functions in combination with a program already recorded in the computer system, or may implement the functions using a programmable logic device such as an FPGA.

### [Industrial Applicability]

As described above, the present invention is capable of driving charge transfer gates or charge drainage gates so that charge is stored in charge storages for a given storage duration.

### [Reference Signs List]

1 ... Range imaging device
2 ... Light source unit
3 ... Light receiving unit
321 ... Pixel circuit
4 ... Range image processing unit
CS ... Charge storage
G1, G2, G3, G4 ... Charge transfer transistor
GD1, GD2 ... Charge drainage transistor
PD ... Photoelectric conversion element
PO ... Optical pulse

## Claims

1. A range imaging element comprising:
a semiconductor substrate; and
a pixel circuit formed on the semiconductor substrate, the pixel circuit including at least
a photoelectric conversion element configured to generate charge based on light incident from a space of which measurement is to be performed,
charge storages each configured to store at least some of the generated charge,
at least one charge transfer transistor provided on a transfer path, the at least one charge transfer transistor being configured to transfer at least some of the generated charge from the photoelectric conversion element to a corresponding one of the charge storages through the transfer path, and
at least one charge drainage transistor provided on a drainage path, the at least one charge drainage transistor being configured to drain the generated charge from the photoelectric conversion element through the drainage path, wherein
a surface of the photoelectric conversion element has a rectangular shape in plan view,
the at least one charge transfer transistor comprises 2M charge transfer transistors, and the at least one charge drainage transistor comprises 2N charge drainage transistors, M being an integer greater than or equal to 2, N being an integer greater than or equal to 1, and
at least one of the 2N charge drainage transistors is a floating transistor that is not electrically connected to the photoelectric conversion element.

2. The range imaging element according to claim 1, wherein
M charge transfer transistors of the 2M charge transfer transistors are arranged on each of long sides of the photoelectric conversion element symmetrically with respect to an x-axis that is parallel to the long sides and passes through a center of the photoelectric conversion element, the M charge transfer transistors on one of the long sides facing the M charge transfer transistors on the other of the long sides, and
the 2N charge drainage transistors are provided on respective short sides of the photoelectric conversion element.

3. The range imaging element according to claim 2, wherein
the 2M charge transfer transistors are arranged symmetrically with respect to a y-axis that is parallel to the short sides and passes through the center of the photoelectric conversion element.

4. The range imaging element according to claim 2, wherein
the charge storages are arranged symmetrically with respect to the x-axis.

5. A range imaging device comprising:
a light receiving unit including a range imaging element including
a semiconductor substrate, and
a pixel circuit formed on the semiconductor substrate, the pixel circuit including at least
a photoelectric conversion element configured to generate charge based on light incident from a space of which measurement is to be performed,
charge storages each configured to store at least some of the generated charge,
at least one charge transfer transistor provided on a transfer path, the at least one charge transfer transistor being configured to transfer at least some of the generated charge from the photoelectric conversion element to a corresponding one of the charge storages through the transfer path, and
at least one charge drainage transistor provided on a drainage path, the at least one charge drainage transistor being configured to drain the generated charge from the photoelectric conversion element through the drainage path; and
a range image processing unit configured to control driving of the at least one charge transfer transistor and the at least one charge drainage transistor of the range imaging element, wherein
a surface of the photoelectric conversion element has a rectangular shape in plan view,
the at least one charge transfer transistor comprises 2M charge transfer transistors, and the at least one charge drainage transistor comprises 2N charge drainage transistors, M being an integer greater than or equal to 2, N being an integer greater than or equal to 1, and
the range image processing unit maintains at least one of the 2N charge drainage transistors in an OFF state regardless of whether the charge is drained or stored.

6. The range imaging device according to claim 5, wherein
to drain the charge, the range image processing unit causes a first charge drainage transistor of the 2N charge drainage transistors to be in an ON state, and causes a second charge drainage transistor of the 2N charge drainage transistors to be in the OFF state, the second charge drainage transistor being different from the first charge drainage transistor, and
to perform switching from a state in which the charge is drained to a state in which the charge is stored, the range image processing unit causes the first charge drainage transistor to be in the OFF state and causes one of the charge transfer transistors to be in the ON state, and maintains the second charge drainage transistor in the OFF state.

7. The range imaging device according to claim 5, wherein
N is 1,
the range image processing unit alternately performs first drive control and second drive control for each predetermined drive count,
in the first drive control, a first charge drainage transistor of the two charge drainage transistors is controlled to be switched to the OFF state in a case where the charge transfer transistors is switched to an ON state, and a second charge drainage transistor of the two charge drainage transistors is maintained in the OFF state regardless of whether the one of the 2M charge transfer transistors is in the ON state or in the OFF state, the second charge drainage transistor being different from the first charge drainage transistor, and
in the second drive control, the second charge drainage transistor is controlled to be switched to the OFF state in a case where the charge transfer transistors is switched to the ON state, and the first charge drainage transistor is maintained in the OFF state regardless of whether of the charge transfer transistors is in the ON state or in the OFF state.

8. A range imaging method performed by a range imaging device including:
a light receiving unit including a range imaging element including
a semiconductor substrate, and
a pixel circuit formed on the semiconductor substrate, the pixel circuit including at least
a photoelectric conversion element configured to generate charge based on light incident from a space of which measurement is to be performed,
charge storages each configured to store at least some of the generated charge,
at least one charge transfer transistor provided on a transfer path, the at least one charge transfer transistor being configured to transfer at least some of the generated charge from the photoelectric conversion element to a corresponding one of the charge storages through the transfer path, and
at least one charge drainage transistor provided on a drainage path, the at least one charge drainage transistor being configured to drain the generated charge from the photoelectric conversion element through the drainage path; and
a range image processing unit configured to control driving of the at least one charge transfer transistor and the at least one charge drainage transistor of the range imaging element, wherein
a surface of the photoelectric conversion element has a rectangular shape in plan view,
the at least one charge transfer transistor comprises 2M charge transfer transistors, and the at least one charge drainage transistor comprises 2N charge drainage transistors, M being an integer greater than or equal to 2, N being an integer greater than or equal to 1, and
the range image processing unit maintains at least one of the 2N charge drainage transistors in an OFF state regardless of whether the charge is drained or stored.
